# EUROPEAN PATENT APPLICATION

(11) **EP 4 502 053 A1**
(43) Date of publication of application: **05.02.2025**
(21) Application number: 23774849.6
(22) Date of filing: 20.03.2023
(51) Int. Cl.: C08L 53/02, C08J 5/18, C08K 3/013, C08K 3/22, C08L 23/16, C09K 5/14

(54) **THERMOPLASTIC ELASTOMER COMPOSITION, THERMALLY CONDUCTIVE SHEET, AND HEAT-DISSIPATING STRUCTURE**

(30) Priority: 24.03.2022 JP 2022048879
(71) Applicant: Mitsubishi Materials Corporation, Tokyo 100-8117 (JP)
(72) Inventor: ASHIDA, Keiko, Amagasaki-shi, Hyogo 660-0856 (JP)
(74) Representative: Hoffmann Eitle
(86) International application number: PCT/JP2023/010820
(87) International publication number: WO 2023/182254

(57) **Abstract**

The thermoplastic elastomer composition contains a base polymer containing a styrene-based thermoplastic elastomer and an ethylene-propylene-based rubber, and a thermally conductive filler (14), in which the thermoplastic elastomer composition contains 200 parts by mass or more and 4,000 parts by mass or less of the thermally conductive filler (14) with respect to 100 parts by mass of the base polymer.

## Description

### TECHNICAL FIELD

The present invention relates to a thermoplastic elastomer composition, and a thermally conductive sheet and a heat-dissipating structure using the same.

Priority is claimed on Japanese Patent Application No. 2022-048879, filed March 24, 2022, the content of which is incorporated herein by reference.

### BACKGROUND ART

In recent years, with the increase in energy of a secondary battery module, for example, a lithium ion secondary battery (hereinafter, also referred to as "secondary battery") and with the increase in density of elements constituting an electronic or electric circuit board, the amount of heat generated from the secondary battery, the electronic or electric circuit board, or the like has been increased. A heat-dissipating sheet has been used as a medium for efficiently releasing such heat (see, for example, Patent Document 1).

On the other hand, for a secondary battery, an electronic or electric circuit board, or the like used in a cold region or the like, it may be necessary to heat these units to a predetermined operation temperature before operating these units until the predetermined operation temperature is reached, and in this case, it may be necessary to supply heat to the secondary battery or the electronic or electric circuit board from the outside by a heater or the like. In order to increase a contact area by enhancing shape conformability of such a heater to a surface of the secondary battery or the electronic or electric circuit board, and to improve thermal conductivity (heat dissipation and heat absorption), development of a thermally conductive sheet having improved flexibility has been carried out.

### CITATION LIST

### PATENT DOCUMENT

[Patent Document 1]
Japanese Unexamined Patent Application, First Publication No. 2017-069341

### SUMMARY OF INVENTION

### TECHNICAL PROBLEM

However, since the thermally conductive sheet disclosed in Patent Document 1 has a complicated layer structure, it is difficult to process the thermally conductive sheet to be in close contact with a heating element having a complicated surface shape. There has been a demand for a thermoplastic elastomer composition capable of being deformed in a flexible manner to follow the surface shape of the heating element.

The present invention has been made in view of such a background, and an object of the present invention is to provide a thermoplastic elastomer composition having high flexibility and capable of being easily deformed in accordance with a surface shape of an application object, and to provide a thermally conductive sheet and a heat-dissipating structure using the same.

### SOLUTION TO PROBLEM

In order to achieve the above objective, the present invention is configured as follows.

That is, the thermoplastic elastomer composition according to one aspect of the present invention is a thermoplastic elastomer composition containing a base polymer containing a styrene-based thermoplastic elastomer and an ethylene-propylene-based rubber, and a thermally conductive filler, in which the thermoplastic elastomer composition contains 200 parts by mass or more and 4,000 parts by mass or less of the thermally conductive filler with respect to 100 parts by mass of the base polymer.

According to the present invention, in the thermoplastic elastomer composition containing a base polymer containing a styrene-based thermoplastic elastomer and an ethylene-propylene-based rubber, and a thermally conductive filler, since the thermoplastic elastomer composition contains 200 parts by mass or more and 4,000 parts by mass or less of the thermally conductive filler with respect to 100 parts by mass of the base polymer, it is possible to constitute a thermoplastic elastomer composition having excellent thermal conductivity, having high flexibility, and capable of being easily deformed in accordance with a surface shape of an application object.

The thermally conductive filler in the present invention is a filler having a thermal conductivity higher than that of the base polymer.

In the thermoplastic elastomer composition according to one aspect of the present invention, the ethylene-propylene-based rubber may have an ethylene content in a range of 50% by mass or more and 80% by mass or less.

In the thermoplastic elastomer composition according to one aspect of the present invention, the ethylene-propylene-based rubber may be an ethylene-propylene-diene terpolymer.

In the thermoplastic elastomer composition according to one aspect of the present invention, in a case where the base polymer is set to 100% by mass, the styrene-based thermoplastic elastomer may be contained in a range of 50% by mass or more and 75% by mass or less.

In the thermoplastic elastomer composition according to one aspect of the present invention, the thermally conductive filler may contain at least one of metal, a metal oxide, a metal hydroxide, a metal nitride, or carbon.

In the thermoplastic elastomer composition according to one aspect of the present invention, the thermally conductive filler may contain aluminum oxide.

In the thermoplastic elastomer composition according to one aspect of the present invention, the thermally conductive filler may be spherical particles or rounded particles.

The thermally conductive sheet according to another aspect of the present invention is obtained by molding the thermoplastic elastomer composition according to each of the above-described items into a sheet shape.

In the heat-dissipating structure according to still another aspect of the present invention, the thermally conductive sheet according to the above-described item is attached to a surface of a heating element.

In addition, in the heat-dissipating structure according to still another aspect of the present invention, the heating element may be a lithium ion secondary battery.

### ADVANTAGEOUS EFFECTS OF INVENTION

According to the above-described aspects of the present invention, it is possible to provide a thermoplastic elastomer composition having high flexibility and capable of being easily deformed in accordance with a surface shape of an application object, and to provide a thermally conductive sheet and a heat-dissipating structure using the same.

### BRIEF DESCRIPTION OF DRAWINGS

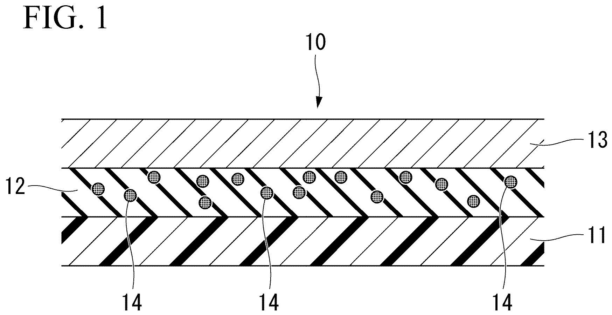

FIG. 1 is a cross-sectional view showing a heat-dissipating structure to which a thermally conductive sheet according to an embodiment of the present invention is attached.

### DESCRIPTION OF EMBODIMENTS

Hereinafter, the thermoplastic elastomer composition, the thermally conductive sheet, and the heat-dissipating structure according to the embodiment of the present invention will be described with reference to the drawings. Each embodiment to be described below is specifically described for better understanding of the gist of the invention, and does not limit the present invention unless otherwise specified. In addition, in the drawings used in the following description, for convenience, a portion serving as a main part may be enlarged in some cases in order to make the features of the present invention easy to understand, and a dimensional ratio or the like of each component is not always the same as an actual one.

### (Thermoplastic elastomer composition)

The thermoplastic elastomer composition according to the present embodiment is a thermoplastic elastomer composition containing a thermally conductive filler with a base polymer containing a styrene-based thermoplastic elastomer and an ethylene-propylene-based rubber, in which the thermally conductive filler is contained in an amount of 200 parts by mass or more and 4,000 parts by mass or less with respect to 100 parts by mass of the base polymer.

As the styrene-based thermoplastic elastomer constituting the thermoplastic elastomer composition, a block copolymer including a polymer containing a vinyl aromatic compound and a polymer containing a conjugated diene compound, and a hydrogenated block copolymer obtained by adding hydrogen to the block copolymer are exemplary examples.

The styrene-based thermoplastic elastomer is a thermoplastic block copolymer having a basic structural unit including a block (hard segment) consisting of polystyrene and a block (soft segment) which imparts rubber elasticity, and forms a polymer having various structures depending on difference of the soft segment.

As the soft segment of the styrene-based thermoplastic elastomer, for example, styrene-butadiene-styrene (SBS), styrene-isoprene-styrene (SIS), styrene-vinyl polyisoprene-styrene (vinyl SIS), styrene-ethylene-butylene-styrene (SEBS), styrene-ethylene-propylene-styrene (SEP), styrene-ethylene-ethylene propylene-styrene (SEEPS), and hydrogenated vinyl SIS are exemplary examples.

The above-described soft segment may be used alone or in combination of two or more kinds thereof. In addition, from the viewpoint that filling property of the filler described later is favorable, it is preferable to include the hydrogenated block copolymer, it is more preferable to include any one or both of SEEPS or hydrogenated vinyl SIS, and it is still more preferable to include hydrogenated vinyl SIS. A styrene content (ST%) contained in 100% by mass of the styrene-based thermoplastic elastomer is not particularly limited, but is preferably 10% by mass or more and 60% by mass or less, and more preferably 15% by mass or more and 40% by mass or less. A number-average molecular weight thereof is not particularly limited, but is, for example, 60,000 or more and 400,000 or less.

The styrene-based thermoplastic elastomer can be easily obtained from a commercially available product. As the commercially available product, for example, styrene-butadiene thermoplastic elastomers (TR1086, TR1600, TR2000, TR2001, TR2003, TR2250, TR2500, TR2601, TR2630, TR2787, and TR2827, which are SBS) manufactured by JSR Corporation; styrene-isoprene thermoplastic elastomers (SIS5002, SIS5229, SIS5250, SIS5403, and SIS5506, which are SIS) manufactured by JSR Corporation; SEPTON series (1020 which is SEP; 2002, 2004F, 2005, 2006, 2063, and 2104, which are SEPS; 4033, 4044, 4055, 4077, and 4099, which are SEEPS; 8004, 8006, and 8007L, which are SEBS, and HG252 which is SEEPS-OH) manufactured by KURARAY CO., LTD.; and HYBRAR series (5125, 5127, and 7135R, which are vinyl SIS (hydrogenated SIS); and 7125F and 7311F, which are vinyl SEPS (hydrogenated SEPS)) manufactured by KURARAY CO., LTD. are exemplary examples. Among these, one kind or two or more kinds thereof can be used in combination.

The ethylene-propylene-based rubber constituting the thermoplastic elastomer composition is not particularly limited as long as it is a rubber obtained by copolymerizing mainly an ethylene monomer and a propylene monomer. As the ethylene-propylene-based rubber, for example, ethylene-propylene rubber (EPM) and ethylene-propylene-diene rubber (EPDM) are exemplary examples. These may be used alone or in combination of two or more kinds thereof. As the ethylene-propylene-based rubber, an ethylene-propylene-diene terpolymer is preferably used.

As a diene component of the ethylene-propylene-based rubber, for example, 5-ethylidene-2-norbomene, dicyclopentadiene, 1,4-hexadiene, methyltetrahydroindene, 5-methylene-2-norbomene, and 1,5-cyclooctadiene are exemplary examples. A content of the diene component is not particularly specified, but is, for example, 1% to 15% by mass with respect to 100% by mass of the ethylene-propylene-based rubber.

An ethylene content in the ethylene-propylene-based rubber is not particularly limited, but is, for example, preferably 50% by mass or more and 80% by mass or less, and more preferably 40% by mass or more and 70% by mass or less, because it is easy to obtain as a commercially available product. In addition, from the viewpoint of flexibility of a thermally conductive sheet obtained by processing the thermoplastic elastomer composition into a sheet shape in a low-temperature environment of a room temperature or lower, the ethylene content is preferably 40% by mass or more and 65% by mass or less. The ethylene content can be determined by ASTM D 3900 which is a standard of the American Society for Testing and Materials (ASTM).

A polymerization method of such an ethylene-propylene-based rubber is not particularly limited, and for example, a generally known polymerization method such as a method using a vanadium catalyst or a metallocene catalyst can be applied.

A Mooney viscosity measured using a Mooney viscometer, which is a viscosity of the ethylene-propylene-based rubber, is not particularly limited. In a case where the Mooney viscosity ML1 + 4 (125°C) is in a range of 10 or more and 100 or less, melt-kneading with the styrene-based thermoplastic elastomer is easily performed, which is preferable. The "Mooney viscosity ML 1+4 (125°C)" described above is a Mooney viscosity measured by the Mooney viscometer at 125°C using a large rotor in accordance with ASTM D 1646, after pre-heating for 1 minute and rotation start for 4 minutes.

The ethylene-propylene-based rubber can be easily obtained from a commercially available product. As the commercially available product, for example, EP331, EP342, EP251, EP65, EP35, EP33, T7241, EP21, EP51, EP25, EP22, EP24, EP123, EP103AF, EP107F, EP57F/C, EP27, EP93, EP11, EP96, EP501EC, EP98, and EP104E, which are EP rubbers manufactured by JSR Corporation; and EPT0045, 2060M, 3045, 3070, 3091, 3092M, 3110M, X-3042E, 3062EM, 3072EM, 3090EM, X-4010M, 4021, 4045, 4045M, 4070, 8030M, 9090M, 8120E, X-3012P, 3092PM, 3072PM, K-9720, and PX-049PEM, which are EP rubbers manufactured by Mitsui Chemicals, Inc. are exemplary examples. Among these, one kind or two or more kinds thereof can be used in combination.

As the thermally conductive filler constituting the thermoplastic elastomer composition, metal, a metal oxide, a metal hydroxide, a metal nitride, and carbon are exemplary examples. As the metal, gold, silver, copper, aluminum, tungsten, titanium, nickel, iron, and an alloy of two or more of these metals are exemplary examples.

As the metal oxide of the thermally conductive filler, for example, aluminum oxide, magnesium oxide, beryllium oxide, zinc oxide, silicon oxide, titanium oxide, and the like are exemplary examples. In addition, as the metal hydroxide, for example, aluminum hydroxide is an exemplary example. In addition, as the metal nitride, for example, aluminum nitride, boron nitride, silicon nitride, and the like are exemplary examples. Furthermore, as the carbon, for example, graphite, a carbon fiber, a fullerene, graphene, a carbon nanotube, and the like are exemplary examples. Among these, aluminum oxide is particularly preferable as the thermally conductive filler from the viewpoint that it is inexpensive and easily available.

The thermally conductive filler preferably includes one kind or two or more kinds of the above-described material examples; more preferably includes one kind or two or more kinds of the metal oxide, the metal hydroxide, or the metal nitride; and particularly preferably includes aluminum oxide.

A shape of the thermally conductive filler may be particulate, and from the viewpoint of imparting excellent shape conformability and high thermal conductivity to the thermoplastic elastomer composition, it is preferable to use spherical particles, disk-like particles, particles having a rounded shape with less corners (rounded particles), or amorphous particles.

From the viewpoint of imparting excellent shape conformability and high thermal conductivity to the thermoplastic elastomer composition, an average particle diameter (d50) of the thermally conductive filler is preferably 0.5 µm or more and 120 µm or less, more preferably 3 µm or more and 100 µm or less, and still more preferably 5 µm or more and 90 µm or less.

In a case where the average particle diameter of the thermally conductive filler is less than 0.5 µm, the viscosity of the mixed material is likely to increase during the kneading, and there is a concern that the filling property of the thermally conductive filler with respect to the base polymer is lowered. In addition, in a case where the average particle diameter thereof is more than 120 µm, the surface of the thermally conductive sheet obtained by processing the thermoplastic elastomer composition is likely to be uneven, and there is a concern that processability is deteriorated.

The average particle diameter (d50) referred to herein means a particle diameter at an integrated value of 50% in a particle size distribution obtained by a laser diffraction/scattering method.

From the viewpoint of ensuring both filling property and processability, the thermally conductive filler may have a plurality of peaks in the particle size distribution. Therefore, the thermally conductive filler may include a plurality of kinds of filler particles having different average particle diameters (d50). In a case where the thermally conductive filler includes two kinds of filler particles having different average particle diameters (d50), for example, it is preferable that a peak on a small particle diameter side is in a range of 0.3 µm or more and 10 µm or less and a peak on a large particle diameter side is in a range of 20 µm or more and 100 µm or less.

In addition, in a case where the thermally conductive filler includes three kinds of filler particles, that is, large particles, medium particles, and small particles having different average particle diameters (d50), it is preferable that a peak on a small particle diameter side is in a range of 0.01 µm or more and 1 µm or less, a peak on a medium particle diameter side is in a range of 1 µm or more and 60 µm or less, and a peak on a large particle diameter side is in a range of 10 µm or more and 100 µm or less (provided that, d50 of the large particles > d50 of the medium particles).

In addition, a content of each of the particles in 100% by mass of the thermally conductive filler is not particularly limited, but for example, in a case where a content of the large particles is 45% to 65% by mass, a content of the medium particles is 20% to 40% by mass, and a content of the small particles is 10% to 30% by mass (provided that, the sum of the contents of the large particles, the medium particles, and the small particles is 100% by mass), a thermoplastic elastomer composition having favorable flexuosity can be obtained.

The thermally conductive filler can be easily obtained from a commercially available product. As a commercially available product of the aluminum oxide as the thermally conductive filler, for example, in a case of spherical particles, alumina beads CB-P02, CB-P05, CB-P07, CB-P10, CB-P15, CB-P40, CB-A20S, CB-A30S, CB-A40, CB-A50S, or the like manufactured by SHOWA DENKO K.K.; and spherical alumina DAM-03, DAM-05, DAM-07, DAM-10, DAM-20, DAM-45, DAM-70, DAM-90, or the like manufactured by Denka Company Limited are exemplary examples. In a case of polyhedral alumina, Advanced Alumina AA-03, AA-04, AA-05, AA-07, AA-1.5, AA-2, AA-5, AA-18, or the like manufactured by Sumitomo Chemical Industry Company Limited is an exemplary example. In a case of rounded particles, rounded alumina AS-10, AS-20, AS-30, AS-40, AS-50, AS-400, or the like manufactured by SHOWA DENKO K.K. is an exemplary example. In a case of amorphous particles, electro-fused alumina RW and WA manufactured by SHOWA DENKO K.K.; and AM-21, AM-210, AM-27, ALM-41-0 1, ALM-43, or the like which is a regular soda or low soda crushed product manufactured by Sumitomo Chemical Industry Company Limited are exemplary examples. In a case of coarse products, AL-41-01, AL-43A, AL420A, or the like is an exemplary example. Among these, one kind or two or more kinds thereof can be used in combination.

All of the mentioned thermally conductive fillers other than the aluminum oxide can also be easily obtained from a commercially available product.

The thermoplastic elastomer composition according to the present embodiment is formed by kneading the thermally conductive filler with the base polymer containing the styrene-based thermoplastic elastomer and the ethylene-propylene-based rubber described above.

A content of the thermally conductive filler with respect to the base polymer is in a range of 200 parts by mass or more and 4,000 parts by mass or less with respect to 100 parts by mass of the base polymer. The content of the thermally conductive filler is preferably 300 parts by mass or more and 3,500 parts by mass or less, and more preferably 500 parts by mass or more and 3,000 parts by mass or less. In a case where the content of the thermally conductive filler is less than 200 parts by mass, a thermal conductivity of the thermoplastic elastomer composition is excessively low. In addition, in a case where the content of the thermally conductive filler is more than 4,000 parts by mass, there is a concern that, in a case of forming the thermally conductive sheet from the thermoplastic elastomer composition, cracks are likely to occur due to low plasticity.

In addition, a content proportion of the styrene-based thermoplastic elastomer contained in 100 parts by mass of the base polymer is preferably 50 parts by mass or more and 75 parts by mass or less, and more preferably 55 parts by mass or more and 70 parts by mass or less. In a case where the content proportion of the styrene-based thermoplastic elastomer is within these ranges, in the formation of the thermally conductive sheet using the thermoplastic elastomer composition according to the present embodiment, a balance between the flexibility and the strength can be improved.

In addition, a content proportion of the ethylene-propylene-based rubber contained in 100 parts by mass of the base polymer is preferably 25 parts by mass or more and 50 parts by mass or less, and more preferably 30 parts by mass or more and 45 parts by mass or less. In a case of being within these ranges, in the formation of the thermally conductive sheet using the thermoplastic elastomer composition according to the present embodiment, the balance between the flexibility and the strength can be improved.

In order to improve flame retardancy, fire resistance, and flame resistance, the thermoplastic elastomer composition according to the present embodiment may further contain a flame retardant. As the flame retardant in the thermoplastic elastomer composition according to the present embodiment, for example, one kind or two or more kinds of a hydrated metal-based flame retardant such as aluminum hydroxide and magnesium hydroxide, a phosphorus-based flame retardant, a silicone-based flame retardant, and a bromine-based flame retardant can be used in combination. Among these, from the viewpoint that high flame retardancy can be imparted while maintaining the flexibility, a phosphorus-based flame retardant is preferably used.

A blending proportion of the flame retardant is 10 parts by mass or more and 300 parts by mass or less, preferably 50 parts by mass or more and 200 parts by mass or less with respect to 100 parts by mass of the base polymer containing the styrene-based thermoplastic elastomer and the ethylene-propylene-based rubber. In a case where the blending proportion of the flame retardant is less than 10 parts by mass, the effect of flame retardancy is low, and in a case where the blending proportion is more than 300 parts by mass, it is difficult to uniformly disperse the flame retardant in the thermoplastic elastomer composition.

In order to further improve the flexibility, the thermoplastic elastomer composition according to the present embodiment may further contain a paraffin-based oil. A content proportion of the paraffin-based oil is preferably in a range of 20 parts by mass or more and 500 parts by mass or less, and more preferably in a range of 200 parts by mass or more and 400 parts by mass or less with respect to 100 parts by mass of the base polymer containing the styrene-based thermoplastic elastomer and the ethylene-propylene-based rubber. By setting the content proportion of the paraffin-based oil to be 20 parts by mass or more and 500 parts by mass or less, it is possible to prevent the paraffin-based oil from bleeding out while maintaining the flexibility of the thermoplastic elastomer composition.

The paraffin-based oil preferably has a kinematic viscosity of 30 to 1,000 mm²/sec at 40°C, and more preferably has a kinematic viscosity of 50 to 500 mm²/sec at 40°C.

The paraffin-based oil can be easily obtained from a commercially available product. As the commercially available product, for example, SUNPURE LW70, LW500, P22, P32, or P100 manufactured by JAPAN SUN OIL COMPANY, LTD.; and Diana Process Oil PW-32, PW-90, or PW-380, or the like are exemplary examples. Among these, one kind or two or more kinds thereof can be used in combination.

In the thermoplastic elastomer composition according to the present embodiment, in addition to the above-described components, as long as the effect of being easily collapsed under a load is not impaired, for example, one kind or two or more kinds of a crosslinking agent (organic peroxide-based crosslinking agent), a crosslinking assistant (triaryl isocyanurate (TAIC) or the like), an antioxidant (for example, a phenol-based antioxidant, a hindered phenol-based antioxidant, or the like), an internal lubricant (stearic acid, calcium stearate, or the like), or an external lubricant (sodium oleate or the like) may be added in combination.

A method for producing the thermoplastic elastomer composition according to the present embodiment is not particularly limited, and a known method for producing a mixed resin can be applied. For example, the respective constituent materials described above can be melted and kneaded using a heating kneading machine such as a uniaxial or biaxial extruder, a roll kneading machine, a Banbury mixer, and a kneader to produce the thermoplastic elastomer composition.

As described above, with the thermoplastic elastomer composition according to the present embodiment, since the thermally conductive filler is contained in an amount of 200 parts by mass or more and 4,000 parts by mass or less with respect to 100 parts by mass of the base polymer containing the styrene-based thermoplastic elastomer and the ethylene-propylene-based rubber, it is possible to constitute a thermoplastic elastomer composition having excellent thermal conductivity, having high flexibility, and capable of being easily deformed in accordance with a surface shape of an application object. The thermal conductivity of the thermoplastic elastomer composition is, for example, 0.5 W/m·K or more, and a compression elastic modulus thereof is 0.2 N/mm² or less. In addition, the content of the thermally conductive filler is, for example, 40% by mass or more and 98% by mass or less in 100% by mass of the thermoplastic elastomer composition.

### (Thermally conductive sheet)

The thermoplastic elastomer composition according to the present embodiment is molded into a sheet shape by performing press molding, extrusion molding, or injection molding, thereby obtaining the thermally conductive sheet according to the present embodiment. A thickness of the thermally conductive sheet according to the present embodiment is not particularly limited as long as the sheet has a uniform thickness, and for example, the thickness may be 0.05 mm or more and 10.0 mm or less, preferably 0.5 mm or more and 5 mm or less.

### (Heat-dissipating structure)

FIG. 1 is a cross-sectional view of a heat-dissipating structure to which a thermally conductive sheet according to an embodiment of the present invention is attached.

In a heat-dissipating structure 10, a thermally conductive sheet 12 obtained by molding the thermoplastic elastomer composition into a sheet shape is provided on an upper surface of a heating element 11, and a heat mass member or a heat dissipation member, which can absorb heat, is provided as a member 13 on an upper surface of the thermally conductive sheet 12. Thermally conductive fillers 14 are dispersed in the thermally conductive sheet 12. As a specific example, the thermally conductive sheet 12 in which the thermally conductive fillers 14 are dispersed is provided on the upper surface of the heating element 11 which is an integrated circuit on a printed circuit board, and the member 13 which is a heat sink is provided on the upper surface of the thermally conductive sheet 12.

In the above-described embodiment, the integrated circuit on the printed circuit board has been described as the heating element of the heat-dissipating structure, but the heat-dissipating structure is not limited thereto. The heating element of the heat-dissipating structure may be, for example, a portion other than the integrated circuit of the electronic or electric circuit board, a lithium ion secondary battery cell, a heater for heating an apparatus in a low-temperature state to a predetermined operating temperature, or the like.

Although a description was given of one embodiment of the present invention above, this embodiment is presented as an example and is not intended to limit the scope of the invention. It is possible to implement the embodiment in various other forms and to make various omissions, substitutions, and modifications in a range not departing from the gist of the invention. The embodiment and variations thereof are included within the invention described the scope of the claims and equivalents thereof as well as being included within the scope and the gist of the invention.

### EXAMPLES

Hereinafter, the thermal conductivity, the compression elastic modulus, and the evaluation of flame retardancy class in the UL94 standard of thermoplastic elastomer compositions of Examples 1 to 23 and Comparative Examples 1 to 3 of the present invention, which were produced as samples, are shown below. Compositional proportions of each sample are shown in Tables 1 and 2. Each component shown in Tables 1 and 2 was weighed, kneaded using two rolls, and molded into a thermally conductive sheet having a thickness of 1.0 mm and a thermally conductive sheet having a thickness of 2.0 mm using a compression press, and the thermal conductivity sheets were used for each evaluation.

The numerical values of the styrene-based thermoplastic elastomer and the ethylene-propylene-based rubber in Table 1 indicate a content proportion (part by mass) of the styrene-based thermoplastic elastomer and a content proportion of the ethylene-propylene-based rubber with respect to 100 parts by mass of the base polymer containing the styrene-based thermoplastic elastomer and the ethylene-propylene-based rubber. In Table 2, the numerical value of the thermally conductive filler and other fillers indicates a content (part by mass) of the thermally conductive filler and the other fillers with respect to 100 parts by mass of the base polymer. The numerical value of the paraffin-based oil indicates a content proportion (part by mass) with respect to 100 parts by mass of the base polymer. The numerical value of the flame retardant indicates a blending proportion (part by mass) of the flame retardant with respect to 100 parts by mass of the base polymer.

**TABLE 1**

| | Styrene-based thermoplastic elastomer | | | | Ethylene-propylene-based rubber | | | | Polypropylene |
|---|---|---|---|---|---|---|---|---|---|
| | A-1 | A-2 | A-3 | A-4 | B-1 | B-2 | B-3 | B-4 | C-1 |
| | SEEPS (styrene content: 30% by mass) | Unhydrogenated vinyl SIS (styrene content: 20% by mass) | SEPS (styrene content: 20% by mass) | SEPS (styrene content: 33% by mass) | EPM (ML1 +4 (100°C) :40 | EPDM (ML1 + 4 (125°C): 24 | EPDM (ML1 + 4 (125°C): 26 | EPDM (ML1 + 4 (125°C): 23 | MFR: 1.5 (g/10 min) |
| Example 1 | 70 | | | | | | 30 | | |
| Example 2 | 70 | | | | | | 30 | | |
| Example 3 | 70 | | | | | | 30 | | |
| Example 4 | | | | 65 | | | 35 | | |
| Example 5 | | | | 65 | | | 35 | | |
| Example 6 | | | | 65 | | | 35 | | |
| Example 7 | | | | 65 | | | 35 | | |
| Example 8 | | | | 65 | | | 35 | | |
| Example 9 | | | | 65 | | | 35 | | |
| Example 10 | | | | 65 | | | 35 | | |
| Example 11 | | | | 65 | | | 35 | | |
| Example 12 | | | | 65 | | | 35 | | |
| Example 13 | | | | 65 | | | 35 | | |
| Example 14 | 60 | | | | | 40 | | | |
| Example 15 | 60 | | | | | | 40 | | |
| Example 16 | | | 60 | | 40 | | | | |
| Example 17 | | | 60 | | 40 | | | | |
| Example 18 | | | 60 | | | | 40 | | |
| Example 19 | | | | 60 | | | 40 | | |
| Example 20 | | | | 60 | | | 40 | | |
| Example 21 | | | | 60 | | | 40 | | |
| Example 22 | | | | 65 | | | | 35 | |
| Example 23 | | | | 65 | | | | 35 | |
| Comparative Example 1 | | | 100 | | | | | | |
| Comparative Example 2 | 80 | | | | | | | | 20 |
| Comparative Example 3 | | | | 80 | | | | | 20 |

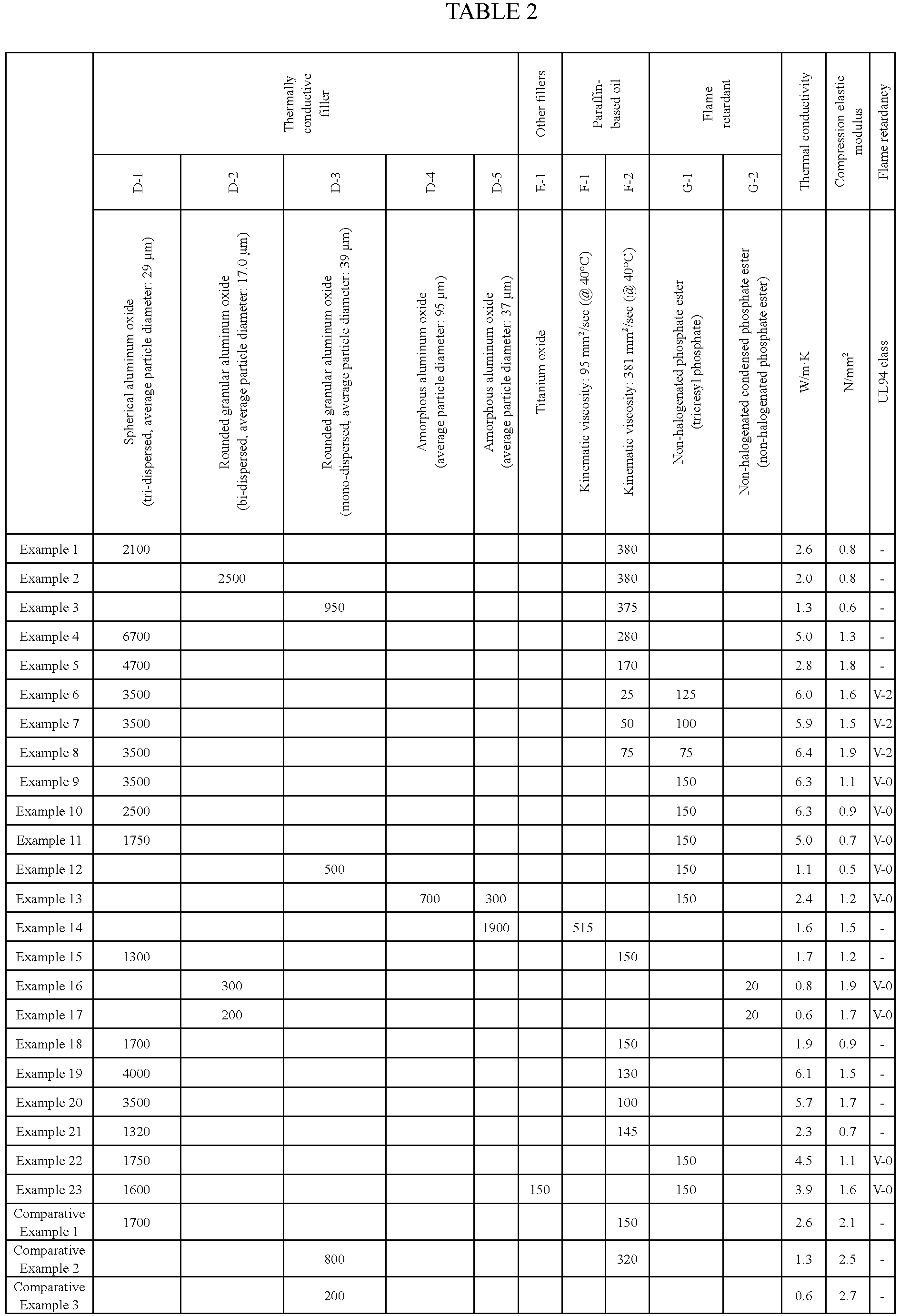

1. Raw materials used for preparing sample
   [Styrene-based thermoplastic elastomer]
      (A-1) SEEPS: styrene-ethylene/ethylene-propylene-styrene block copolymer (styrene content: 30% by mass) (hydrogenated product of styrene-butadiene/isoprene-styrene)
      (A-2) Unhydrogenated vinyl SIS: styrene-isoprene-styrene block copolymer (styrene content: 20% by mass)
      (A-3) SEPS: styrene-ethylene-propylene-styrene block copolymer (hydrogenated SIS) (styrene content: 20% by mass)
      (A-4) SEPS: styrene-ethylene-propylene-styrene block copolymer (hydrogenated SIS) (styrene content: 33% by mass)
   [Ethylene-propylene-based rubber]
      (B-1) EPM: ethylene-propylene rubber (ML1 + 4 (100°C): 40, (ethylene content: 52% by mass))
      (B-2) EPDM: ethylene-propylene-diene rubber (ML1 + 4 (125°C): 24, diene component: ENB (5-ethylidene-2-norbomene) (diene content: 8.1% by mass) (ethylene content: 51% by mass))
      (B-3) EPDM: ethylene-propylene-diene rubber (ML1 + 4 (125°C): 26, diene component: ENB (5-ethylidene-2-norbomene) (diene content: 5.8% by mass) (ethylene content: 61% by mass))
      (B-4) EPDM: ethylene-propylene-diene rubber (EP51 (ML1 + 4 (125°C): 23, diene component: ENB, diene content: 5.8% by mass, ethylene content: 67% by mass))
   [Polypropylene]
      (C-1) PP: polypropylene (MFR: 1.5 (g/10 min))
   [Thermally conductive filler]
      (D-1) Spherical aluminum oxide (tri-dispersed, average particle diameter: 29 µm, BET specific surface area: 1.2 m²/g, peak of particle size distribution frequency: 70.8 µm, 3.9 µm, and 0.5 µm)
      (D-2) Rounded granular aluminum oxide (bi-dispersed, average particle diameter: 17.0 µm, BET specific surface area: 0.65 m²/g, peak of particle size distribution frequency: 22.5 µm and 1.8 µm)
      (D-3) Rounded granular aluminum oxide (mono-dispersed, average particle diameter: 39 µm, BET specific surface area: 0.5 m²/g)
      (D-4) Amorphous aluminum oxide: average particle diameter: 95 µm
      (D-5) Amorphous aluminum oxide: average particle diameter: 37 µm
   [Other fillers]
      (E-1) Titanium oxide: particle diameter: 0.15 µm
   [Paraffin-based oil]
      (F-1) Kinematic viscosity: 95 mm²/sec (@ 40°C)
      (F-2) Kinematic viscosity: 381 mm²/sec (@ 40°C)
   [Flame retardant]
      (G-1) Non-halogenated phosphate ester (tricresyl phosphate): TCP, manufactured by DAIHACHI Chemical
      (G-2) Non-halogenated condensed phosphate ester (non-halogenated phosphate ester): DAIGUARD-880, manufactured by DAIHACHI Chemical
2. Sample forming conditions

The raw materials were roll-kneaded at 145°C to obtain a thermoplastic resin composition, and the thermoplastic resin composition was molded into a thermally conductive sheet having a desired thickness using a press molding machine set at 145°C.

### 3. Measurement of each evaluation item

### (1) Measurement of thermal conductivity

The thermal conductivity at a measurement temperature of 50°C was measured by a steady state comparative-longitudinal heat flow method based on JIS H7903: 2008.

### (2) Measurement of compression elastic modulus

Each sample was molded into a circular sheet having a diameter of 28 mm ± 1 mm and a thickness of 2 mm ± 0.5 mm, and the sheet was sandwiched between a pair of smooth polyethylene terephthalate sheets. Thereafter, a compression test round plate jig (ϕ: 10 cm) was set in a tensile tester, and a reaction force (test force) in a case of compressing the sample at a room temperature of 25°C at 1 mm/min was measured. From a change in thickness in a case where the reaction force was changed from 10 N to 20 N, a compression elastic modulus was obtained.

### (3) Evaluation of flame retardancy

In accordance with the Underwriters Laboratories Inc. (UL) flame retardancy standard, UL94, a burning line was drawn at 1 inch and 4 inches from the end part of each sample, one end part was applied with a flame for 30 seconds, and a combustion rate between the burning lines of the intermediate 3 inches was measured. In addition, at the lower end center of each sample, after applying the flame to the sample about ten times, the sample was separated from the 6-inch flame, and the combustion time of the sample was measured. The combustion time, the growing time, and the presence or absence of ignition of a cotton wool placed under the 12 inches were recorded to specify the flame retardancy class.

Table 2 shows the results of the thermal conductivity, compression elastic modulus, and flame retardancy evaluations. In addition, "-" in the flame retardancy evaluation indicates a result of not satisfying any class standard.

According to the results shown in Table 2, all the samples of Examples 1 to 23 had a thermal conductivity of 0.5 W/m·K or more and a compression elastic modulus of 2 or less, and it was found that the thermally conductive sheet having both excellent thermal conductivity and shape conformability with less deformation due to the compression could be realized. In addition, it was found that, in the sample to which the flame retardant was added, the flame retardancy satisfying the UL94 standard could be imparted. On the other hand, in Comparative Examples 1 to 3 of the related art, the compression elastic modulus was more than 2, and there was a concern that, in a case of being bent according to the shape of the object, the strain was increased and the crack was generated. From the above-described results, the effect of the present invention was confirmed.

Some of Examples described above contained the paraffin-based oil and the flame retardant, but the paraffin-based oil and the flame retardant were not essential components of the thermoplastic elastomer composition according to the embodiment of the present invention. Even in a case where the paraffin-based oil and the flame retardant were not contained, the thermoplastic elastomer composition having excellent thermal conductivity and compression elastic modulus could be obtained.

### INDUSTRIAL APPLICABILITY

According to the present invention, it is possible to provide a thermoplastic elastomer composition having high flexibility and capable of being easily deformed in accordance with a surface shape of an application object, and to provide a thermally conductive sheet and a heat-dissipating structure using the same.

### REFERENCE SIGNS LIST

10: heat-dissipating structure
11: heating element
12: thermally conductive sheet
13: member (heat mass member or heat dissipation member)
14: thermally conductive filler

## Claims

1. A thermoplastic elastomer composition comprising:
a base polymer containing a styrene-based thermoplastic elastomer and an ethylene-propylene-based rubber; and
a thermally conductive filler,
wherein the thermoplastic elastomer composition contains 200 parts by mass or more and 4,000 parts by mass or less of the thermally conductive filler with respect to 100 parts by mass of the base polymer.

2. The thermoplastic elastomer composition according to Claim 1,
wherein the ethylene-propylene-based rubber has an ethylene content in a range of 50% by mass or more and 80% by mass or less.

3. The thermoplastic elastomer composition according to Claim 1 or 2,
wherein the ethylene-propylene-based rubber is an ethylene-propylene-diene terpolymer.

4. The thermoplastic elastomer composition according to any one of Claims 1 to 3,
wherein, in a case where the base polymer is set to 100 parts by mass, the styrene-based thermoplastic elastomer is contained in a range of 50 parts by mass or more and 75 parts by mass or less.

5. The thermoplastic elastomer composition according to any one of Claims 1 to 4,
wherein the thermally conductive filler contains at least one of metal, a metal oxide, a metal hydroxide, a metal nitride, or carbon.

6. The thermoplastic elastomer composition according to Claim 5,
wherein the thermally conductive filler contains aluminum oxide.

7. The thermoplastic elastomer composition according to any one of Claims 1 to 6,
wherein the thermally conductive filler is spherical particles or rounded particles.

8. A thermally conductive sheet obtained by molding the thermoplastic elastomer composition according to any one of Claims 1 to 7 into a sheet shape.

9. A heat-dissipating structure in which the thermally conductive sheet according to Claim 8 is attached to a surface of a heating element.

10. The heat-dissipating structure according to Claim 9,
wherein the heating element is a lithium ion secondary battery.
